Europäisches Patentamt

European Patent Office

Office européen des brevets

(19)

(11) Veröffentlichungsnummer : **0 010 525**
**B1**

(12) # EUROPÄISCHE PATENTSCHRIFT

(45) Veröffentlichungstag der Patentschrift :
30.09.81

(51) Int. Cl.³ : **C 07 C 50/22// C09B3/04**

(21) Anmeldenummer : **79810132.5**

(22) Anmeldetag : **18.10.79**

(54) Verfahren zur Herstellung von Benzanthron.

(30) Priorität : **24.10.78 CH 10980/78**
**22.01.79 CH 624/79**

(43) Veröffentlichungstag der Anmeldung :
**30.04.80 (Patentblatt 80/09)**

(45) Bekanntmachung des Hinweises auf die Patenterteilung : **30.09.81 Patentblatt 81/39**

(84) Benannte Vertragsstaaten :
**CH DE FR GB**

(56) Entgegenhaltungen :
**DE - C - 585 428**
**GB - A - 364 042**
**GB - A - 386 989**
**US - A - 1 896 147**

(73) Patentinhaber : **CIBA-GEIGY AG**
**Patentabteilung Postfach**
**CH-4002 Basel (CH)**

(72) Erfinder : **Jäger, Horst, Dr.**
**Wyhlenweg 10**
**CH-4126 Bettlngen (CH)**

EP 0 010 525 B1

Imprimerie Jouve, 17, rue du Louvre, 75001 Paris, France

## Verfahren zur Herstellung von Benzanthron

Die vorliegende Erfindung betrifft ein verbessertes Verfahren zur Herstellung von Benzanthron durch Umsetzung von Anthrachinon mit Glyzerin und einem Reduktionsmittel in 70- bis 90 %iger Schwefelsäure als Reaktionsmedium, indem man als Reduktionsmittel ein Gemisch, bestehend aus einem reduzierend wirkenden Metall, vor allem Eisen, und einem schwefelhaltigen Reduktionsmittel, verwendet.

Die Herstellung von Benzanthron aus Anthrachinon, Glyzerin und einem Reduktionsmittel ist seit langem bekannt, siehe z.B. Bally, B. 38 195 (1905). Seither wurde verschiedentlich versucht, dieses Herstellungsverfahren zu verbessern. Die Verwendung von Anilin als Reduktionsmittel [Scholl und Bally, B. 44, 1956 (1911)] erlangte keine wirtschaftliche Bedeutung. Die Verwendung von z.B. 70- bis 90 %iger Schwefelsäure als Reaktionsmedium und Metallen, wie Eisen, Zink, Aluminium oder Kupfer, als Reduktionsmittel sind z.B. in folgenden Schriften beschrieben : US-Patent 1 896 147 (Reduktionsmittel Fe). US-Patent 2 034 485 und UdSSR-Patent 401 130 (Reduktionsmittel Fe + Cu), A.M. Lahin, Zhur. Obschei Khim. 18, 308 (1948), vgl. Ca 44, 1079b (Reduktionsmittel Zn, Al, $CuSo_4$), US-Patent 1 791 309 (Reduktionsmittel Zn + Al). Unter diesen hat die Verwendung von Eisen als Reduktions mittel die grösste praktische Bedeutung erlangt. Dabei wurde Benzanthron in guter Ausbeute und Reinheit erhalten. Jedoch hat die Verwendung von Eisen als alleiniges Reduktionsmittel grosse wirtschaftliche und ökologische Nachteile, indem mindestens 2 Mol Eisen pro Mol Anthrachinon eingesetzt werden müssen, wobei das optimale Anthrachinon : Eisen-Verhältnis bei 1 : 2,5 liegt. Dies bedingt, dass pro Mol Benzanthron 2,5 Mol Eisensulfat oder auf 1 000 g Benzanthron 1 700 g Eisensulfat als Abfallprodukt anfallen. Zusätzlich entstehen grosse Mengen Abfallschwefelsäure, da zur Isolierung des gebildeten Benzanthrons die Schwefelsäure auf ca. 20 % zu verdünnen ist, welche dann entweder energie-aufwendig wieder zu konzentrierter Schwefelsäure regeneriert werden muss oder deren Beseitigung ein Umweltproblem darstellt.

Es wurde nun gefunden, dass bei Verwendung eines Gemisches, bestehend aus einem reduzierend wirkenden Metall und einem schwefelhaltigen Reduktionsmittel überraschenderweise die vorgenannten Nachteile weitgehend behoben und Benzanthron in hoher Ausbeute und Reinheit erhalten wird.

So kann beispielsweise das Anthrachinon : Eisen-Verhältnis bei gleichzeitiger Einleitung von 1,0 bis 2,5 Mol $SO_2$ pro Mol Eisen von 1 : 2,5 auf 1 : 1,2 bis 1,5 gesenkt werden. Da nach dem erfindungsgemässen Verfahren zudem die Schwefelsäure als Reaktionsmedium nur auf ca. 60 % verdünnt werden muss, kann deren Recyclierung auf einfache Art und Weise erfolgen, indem man sie mittels oleum wieder auf 85 % aufkonzentriert.

Das neue verbesserte Verfahren zur Herstellung von Benzanthron aus Anthrachinon, Glyzerin und einem Reduktionsmittel in 75- bis 95 % iger Schwefelsäure als Reaktionsmedium ist dadurch gekennzeichnet, dass man ein Gemisch, bestehend vor dem Reaktionsbeginn aus einem reduzierend wirkenden Metall und einem schwefelhaltigen Reduktionsmittel, verwendet, wobei das Mol-Verhältnis von Anthrachinon zu reduzierend wirkendem Metall 1,0 : 1,0 bis 1,5, insbesondere aber 1,0 : 1,1 bis 1,25, und dasjenige von schwefelhaltigem Reduktionsmittel pro Mol Metall 1,0 : 0,05 bis 3,0, insbesondere 1,0 : 0,2 bis 2,5, beträgt, die Reaktion im Bereich von 95 bis 150 °C durchführt, das Reaktionsprodukt nach Herabsetzung der Säurekonzentration auf 55 bis 70 % in einem inerten organischen Lösungsmittel bei 70 bis 110 °C aufnimmt und nach Phasentrennung aus der organischen Phase z.B. durch Destillation bzw. Kristallisation isoliert.

Als reduzierend wirkende Metalle, die zweckmässig in Pulverform eingesetzt werden, kommen z.B. Zink, Aluminium, Kupfer, vor allem jedoch Eisen, in Betracht.

Als schwefelhaltige Reduktionsmittel kommen z.B. $H_2S$, Schwefel, $SOCl_2$, $Na_2S_2O_4$, vor allem aber $SO_2$, in Betracht. Bei der Verwendung von $SO_2$ als schwefelhaltiges Reduktionsmittel wird vorteilhaft zusätzlich zum während der Reduktion durch Dehydrierung von Schwefelsäure entstehenden $SO_2$ noch 0,0 bis 3,0 Mol $SO_2$ eingesetzt.

Die Reaktionstemperatur beträgt 95 bis 150 °C, vorteilhaft 100 bis 130 °C, die Extraktionstemperatur (Aufnahme des Produktes im organischen Lösungsmittel) 90 bis 110 °C, vorteilhaft 90 bis 100 °C.

Die Schwefelsäurekonzentration beträgt während der Reaktion vorteilhaft 75 bis 95 %, insbesondere aber 85 %, nach beendeter Reaktion und vor der Extraktion wird diese vorteilhaft auf 55 bis 70 %, insbesondere auf 60 %, verdünnt.

Zur Isolierung durch Extraktion des gebildeten Reaktionsproduktes und Phasentrennung sind höhersiedende, inerte organische Lösungsmittel, vor allem Halogenkohlenwasserstoffe, insbesondere aber Chlorbenzole, wie z.B. Monochlorbenzol, geeignet.

Ein wesentlicher Vorteil des neuen erfindungsgemässen Verfahrens ist, dass sowohl das inerte organische Lösungsmittel als auch die 60 %ige Schwefelsäure praktisch vollständig recycliert werden können. Das überschüssige Schwefeldioxid kann durch Umpumpen im Kreislauf gehalten werden oder z.B. als Natriumsulfit einer weiteren Verwertung zugeführt werden. Es bietet somit ausserordentliche ökologische und wirtschaftliche Vorteile. Benzanthron ist ein wichtiges Zwischenprodukt zur Herstellung von Farbstoffen und Pigmenten, z.B. gemäss J. Houben, W. Fischer « Anthracen und die Anthrachinone », Bd. II, Seiten 774-777 (1929) oder Venkataraman « Synthetic Dyes », Vol. II, Seiten 963-965 (1952).

Das neue Verfahren wird im einzelnen durch

nachfolgende Beispiele beschrieben. Teile bedeuten Gewichtsteile.

### Beispiel 1

166,4 Teile Anthrachinon werden in 985 Teilen 85 %iger Schwefelsäure bei Raumtemperatur suspendiert und unter Einleiten von Schwefeldioxyd auf 120 °C erhitzt. Bei 120 °C wird eine Mischung aus 147,2 Teilen Glyzerin und 67,2 Teilen Eisenpulver innert 2,5 Stunden zugetropft, wobei die Temperatur auf 120 °C gehalten wird. Nachdem alles Glyzerin zugegeben ist, wird die Temperatur für weitere 2 Stunden auf 130 °C gehalten. Während der gesamten Reaktionsdauer werden 135 Teile Schwefeldioxyd in die Reaktionsmischung eingegast. Nach beendeter Reaktion wird die Schwefelsäurekonzentration durch Zugabe von 140 Teilen Wasser auf 60 % herabgesetzt, die Temperatur auf 100 bis 110 °C gesenkt und 3 000 Teile Chlorbenzol zugegeben. Während 15 Minuten wird das Reaktionsgut mit dem Chlorbenzol vermischt. Dann lässt man absitzen und trennt die entstandenen 2 Phasen, wobei die Chlorbenzolphase die obere ist, entfernt das Chlorbenzol mittels Wasserstrahlvakuumdestillation und isoliert als Rückstand 155,4 Teile Benzanthron, Smp. 171 bis 173 °C, Ausbeute 84,4 % d.Th.

Das Chlorbenzol kann im Kreislauf geführt werden. Das überschüssige Schwefeldioxid wird als Natriumsulfit zurückgewonnen und entsprechender Verwendung zugeführt. Die 60 %ige Schwefelsäure aus der Phasentrennung wird mittels Oleum auf 85 % aufkonzentriert und wieder in die Reaktion eingesetzt.

### Beispiel 2

166,4 Teile Antrachinon werden in 985 Teilen 85 %iger Schwefelsäure bei Raumtemperatur suspendiert und unter Einleiten von 20 Teilen Schwefeldioxyd auf 120 °C erhitzt. Das Schwefeldioxyd wird in einer geschlossenen, mit Druckausgleich versehenen Apparatur umgepumpt.

Bei 120 °C wird eine Mischung aus 147 Teilen Glyzerin und 53 Teilen Eisenpulver innert 2,5 Stunden zugetropft, wobei die Temperatur auf 130-135 °C gehalten wird. Nachdem alles Glyzerin zugegeben ist, wird die Temperatur für weitere 2 Stunden auf 130 °C gehalten. Nach beendeter Reaktion wird die Schwefelsäurekonzentration durch Zugabe von 140 Teilen Wasser auf 60 % gesenkt, wobei gleichzeitig Schwefeldioxyd abgegast wird.

Die Temperatur wird auf 100-110 °C gesenkt und 3 000 Teile Chlorbenzol werden zugegeben. Die Aufarbeitung erfolgt wie in Beispiel 1 angegeben. Ausbeute 163,9 Teile Benzanthron = 89,0 % d.Th. Smp. 169-171 °C.

### Beispiel 3

In einem zu Beispiel 2 analogen Versuch wird nach Zugabe von 140 Teilen Wasser das gesamte Reaktionsgut filtriert.

Aus dem Filtrat mit einem Titer von 60,5 % $H_2SO_4$ erhält man nach dem Aufkonzentrieren am Vakuum 689 Teile 85 %ige Schwefelsäure zurück, welche ohne weitere Reinigung wiederverwendet werden kann. Das sind 70 % der ursprünglich eingesetzten Schwefelsäure. Der saure Filterrückstand wird mit Wasser neutral gewaschen, getrocknet und unter Vakuum (3 mm) destillativ gereinigt. Ausbeute 161,0 Teile Benzanthron = 87,5 % d.Th. Smp. 169-170 °C.

### Beispiel 4

62,4 Teile Anthrachinon werden in 369 Teilen 85 %iger Schwefelsäure auf 130 °C erhitzt.

Man lässt gleichzeitig eine Mischung aus 55 Teilen Glyzerin mit 25 Teilen Eisenpulver und 89 Teile Thionylchlorid innert 1 Stunde zutropfen. Man lässt 2 Stunden bei 130 °C ausreagieren und arbeitet wie in Beispiel 1 beschrieben auf.

Ausbeute 59,3 Teile Benzanthron = 85,9 % d.Th. Smp. 166-169 °C.

### Beispiel 5

62,4 Teile Anthrachinon werden in 369 Teilen 85 %iger Schwefelsäure auf 130 °C erhitzt.

Aus einem Schwefelwasserstoffzylinder gast man 25,5 Teile Schwefelwasserstof ein, während man gleichzeitig eine Mischung aus 55 Teilen Glyzerin und 25 Teilen Eisenpulver zutropft. Reaktion und Aufarbeitung erfolgen wie in Beispiel 4 beschrieben.

Ausbeute 57,8 g = 83,76 d.Th. Smp. 164-167 °C.

### Ansprüche

1. Verfahren zur Herstellung von Benzanthron aus Anthrachinon, Glyzerin und einem Reduktionsmittel in 75- bis 95 %iger Schwefelsäure als Reaktionsmedium, dadurch gekennzeichnet, dass man ein Gemisch, bestehend vor dem Reaktionsbeginn aus einem reduzierend wirkenden Metall und einem schwefelhaltigen Reduktionsmittel, verwendet, wobei das Mol-Verhältnis von Anthrachinon zu reduzierend wirkendem Metall 1,0 : 1,0 bis 1,5 und dasjenige von schwefelhaltigem Reduktionsmittel pro Mol Metall 1,0 : 0,05 bis 3,0 beträgt, die Reaktion im Bereich von 95 bis 150 °C durchführt, das Reaktionsprodukt nach Herabsetzung der Säurekonzentration auf 55 bis 70 % in einem inerten organischen Lösungsmittel bei 70 bis 110 °C aufnimmt und nach Phasentrennung aus der organischen Phase isoliert.

2. Verfahren nach Anspruch 1, dadurch gekennzeichnet, dass man als schwefelhaltiges Reduktionsmittel $H_2S$, Schwefel, $SO_2$, $SOCl_2$ oder $Na_2S_2O_4$ verwendet.

3. Verfahren nach Anspruch 2, dadurch gekennzeichnet, dass man als schwefelhaltiges Reduktionsmittel $SO_2$ verwendet.

4. Verfahren nach Anspruch 1, dadurch gekennzeichnet, dass man als metallische Reduktionsmittel Zink, Aluminium, Kupfer oder Eisen verwendet.

5. Verfahren nach Anspruch 4, dadurch gekennzeichnet, das man als metallisches Reduktionsmittel Eisen verwendet.

6. Verfahren nach Ansprüchen 1 bis 5, dadurch gekennzeichnet, dass man ein Mol-Verhältnis von Anthrachinon zu reduzierend wirkendem Metall von 1,0 : 1,1 bis 1,25 und von schwefelhaltigem Reduktionsmittel pro Mol Metall von 1,0 : 0,2 bis 2,5 verwendet.

7. Verfahren nach Anspruch 1, dadurch gekennzeichnet, dass man als schwefelhaltiges Reduktionsmittel $SO_2$ und als metallisches Reduktionsmittel Eisenpulver verwendet.

8. Verfahren nach Anspruch 1, dadurch gekennzeichnet, dass man die Isolierung des Reaktionsproduktes mit Hilfe inerter organischer Lösungsmittel durch Phasentrennung vornimmt.

9. Verfahren nach Anspruch 8, dadurch gekennzeichnet, dass man als inerte organische Lösungsmittel Halogenkohlenwasserstoffe, insbesondere Chlorbenzole, verwendet.

## Claims

1. A process for the production of benzanthrone from anthraquinone, glucol and a reducing agent in 75 to 95 % sulfuric acid as reaction medium, characterised in that there is used a mixture consisting, before the commencement of the reaction, of a metal reducing agent and a sulfur-containing reducing agent, the molar ratio of anthraquinone to metal reducing agent being 1.0 : 1.0 to 1.5 and that of the sulfur-containing reducing agent per mole of metal being 1.0 : 0.5 to 3.0, the reaction is carried out in the temperature range from 95°-150 °C, the reaction product is taken up in an inert organic solvent at 70°-110 °C after the concentration of the acid has been lowered to 55-70 % and, after phase separation, the product is isolated from the organic phase.

2. A process according to claim 1, characterised in that $H_2S$, sulfur, $SO_2$, $SOCl_2$ or $Na_2S_2O_4$ is used as sulfur-containing reducing agent.

3. A process according to claim 2, characterised in that $SO_2$ is used as sulfur-containing reducing agent.

4. A process according to claim 1, characterised in that zinc, aluminium, copper or iron is used as metal reducing agent.

5. A process according to claim 4, characterised in that iron is used as metal reducing agent.

6. A process according to claims 1 to 5, characterised in that the molar ratio of anthraquinone to reducing metal is from 1.0 : 1.1 to 1.25 and that of sulfur-containing reducing agent per mole of metal is from 1.0 : 0.2 to 2.5.

7. A process according to claim 1, characterised in that $SO_2$ is used as sulfur-containing reducing agent and iron powder is used as metal reducing agent.

8. A process according to claim 1, characterised in that the reaction product is isolated by phase separation with the aid of an inert organic solvent.

9. A process according to claim 8, characterised in that halogenated hydrocarbons, in particular chlorobenzenes, are used as inert organic solvents.

## Revendications

1. Procédé pour la préparation de benzanthrone à partir d'anthraquinone, de glycérine et d'un agent réducteur, dans l'acide sulfurique à 75-95 % comme milieu réactionnel, caractérisé par le fait qu'on utilise un mélange constitué, avant le début de la réaction, par un métal agissant comme réducteur et un agent réducteur contenant du soufre, le rapport molaire de l'anthraquinone au métal agissant comme réducteur étant de 1,0 : 1,0 à 1,5 et celui de l'agent réducteur contenant du soufre par mole de métal étant de 1,0 : 0,05 à 3,0, que la réaction s'effectue entre 95° et 150 °C, que le produit de réaction après diminution de la concentration de l'acide à 55-70 % est repris dans un solvant organique inerte à 70°-110 °C et après la séparation de phase est isolé de la phase organique.

2. Procédé selon la revendication 1, caractérisé par le fait qu'on utilise comme agent réducteur contenant du soufre $H_2S$, le soufre, $SO_2$, $SOCl_2$ ou $Na_2S_2O_4$.

3. Procédé selon la revendication 2, caractérisé par le fait qu'on utilise comme agent réducteur contenant du soufre, $SO_2$.

4. Procédé selon la revendication 1, caractérisé par le fait que l'on utilise comme agent réducteur métallique le zinc, l'aluminium, le cuivre ou le fer.

5. Procédé selon la revendication 4, caractérisé par le fait qu'on utilise comme agent réducteur métallique le fer.

6. Procédé selon l'une quelconque des revendications 1 à 5, caractérisé par le fait qu'on utilise un rapport molaire de l'anthraquinone au métal agissant comme réducteur de 1,0 : 1,1 à 1,25 et de l'agent réducteur contenant du soufre par mole de métal de 1,0 : 0,2 à 2,5.

7. Procédé selon la revendication 1, caractérisé par le fait qu'on utilise comme agent réducteur contenant du soufre, $SO_2$ et comme agent réducteur métallique, la poudre de fer.

8. Procédé selon la revendication 1, caractérisé par le fait qu'on effectue l'isolation du produit de réaction à l'aide d'un solvant organique inerte par séparation de phase.

9. Procédé selon la revendication 8, caractérisé par le fait qu'on utilise comme solvant organique inerte des hydrocarbures halogénés, en particulier des chlorobenzènes.